# EUROPÄISCHE PATENTSCHRIFT

(11) **EP 1 713 626 B1**
(45) Veröffentlichungstag und Bekanntmachung des Hinweises auf die Patenterteilung: **23.05.2007**
(21) Anmeldenummer: 05707239.9
(22) Anmeldetag: 07.02.2005
(51) Int. Cl.: B27D 1/08, B27D 5/00, B29C 63/04, B23Q 3/155

(54) **VORRICHTUNG ZUM UMMANTELN VON PROFILMATERIAL**
DEVICE FOR COVERING PROFILE MATERIAL
DISPOSITIF POUR ENROBER UN MATERIAU PROFIL

(30) Priorität: 11.02.2004 DE 102004006569
(43) Veröffentlichungstag der Anmeldung: 25.10.2006
(73) Patentinhaber: düspohl Maschinenbau GmbH, 33758 Schloss Holte-Stukenbrock (DE)
(72) Erfinder: WAGNER, Uwe, 33335 Gütersloh (DE)
(74) Vertreter: Hanewinkel, Lorenz
(86) Internationale Anmeldenummer: PCT/EP2005/001203
(87) Internationale Veröffentlichungsnummer: WO 2005/077625

(56) Entgegenhaltungen:
- EP-A- 0 997 260
- DE-C1- 19 508 864
- DE-U1- 29 800 217
- DE-U1- 29 821 047
- DE-U1- 29 910 871
- DE-U1- 29 918 968

## Beschreibung

Die Erfindung betrifft eine Vorrichtung zum Ummanteln von Profilmaterial mit einem Rollenförderer, auf dem das Profilmaterial längsorientiert gefördert wird, und mit Andruckwalzen, die jeweils zueinander so in je eine Andruckstellung positionierbar sind, dass ein beleimtes Mantelmaterial streifenbereichsweise um das Profil des Profilmaterials quer oder leicht angestellt zur Förderrichtung orientiert angedrückt wird, indem einzelne oder mehrere der Andruckwalzen jeweils in Gruppen in Förderrichtung hintereinander angeordnet sind und jeweils mittels eines mehrachsigen Positionierers angedrückt werden.

Eine derartige Vorrichtung ist in der EP 0 997 260 A2 beschrieben. Bei dieser sind in einer Gruppe jeweils zwei Andruckwalzen mit je einem X-Z-Positionierer sowie einem mit zwei Motoren angesteuerten Neigungs- und Vorspurgetriebe in einem Portalrahmen zusammengefasst. Die beiden Lineargetriebe und Getriebeeinstellungen sind mit Schrittmotoren ausgerüstet und jeweils bezüglich einer Grundstellung geeicht, so dass sie reproduzierbar positioniert werden können. Alle Positionierer aller Gruppen sind zentral gesteuert und lassen sich auf ein bestimmtes Profil jeweils programmiert einstellen, so dass eine gleichmäßige Ummantelung gewährleistet ist, sofern die verschiedenen Profile ähnlich sind und die gleichen Andruckrollen zu verwenden sind. Dies wird einer modernen Vertriebs- und Produktionsorganisation im allgemeinen nicht gerecht, da eine sehr große Zahl sehr verschiedener Profile und Ummantelungsmaterialien zum Einsatz kommen und deswegen eine umfangreiche Lagerhaltung, die einer Verringerung der Zahl der Umrüstungen dienen könnte, wirtschaftlich viel zu aufwendig wäre. Demzufolge sind kleinere Chargen eines ummantelten Profils wegen der notwendigen Umrüstungszeiten, die häufig mehrere Stunden betragen, wenn die individuell angepassten Andruckrollen manuell ausgetauscht werden müssen und deren Grundstellungen wieder eingereicht werden müssen, nur sehr unwirtschaftlich herzustellen.

In dem Patent DE 195 08 864 C1 ist eine Vorrichtung zum Ummanteln von Profilmaterial mit einem Rollenförderer gezeigt, wie er dem Stand der Technik entspricht.
Aus dem Gebrauchsmuster DE 299 10 871 U1 geht eine Bördeleinrichtung mit einem Positionierer hervor, der eine Kupplung trägt, in der eine Andruckwalze definiert orientiert gehalten ist.
Das Gebrauchsmuster DE 298 21 047 U1 zeigt eine Werkzeugmaschinen-Anordnung, bei der im Positionierbereich des Positionierers Magazinfächer angeordnet sind, in denen die jeweils nicht benötigten Andruckwalzen ankuppelbar orientiert abgelegt sind.
Aus dem Gebrauchsmuster DE 298 00 217 U1 sind allgemein Roboter mit von Sensorsignalen abhängigen Regelungen der Antriebsmotore bekannt.

Aufgabe der Erfindung ist es, ein manuelles Umrüsten auch für sehr unterschiedliche Profile entbehrlich zu machen und somit die Rüstzeiten erheblich zu reduzieren sowie die bekannten Vorrichtungen zu vereinfachen.

Die Lösung besteht darin, dass die Positionierer je eine automatisch betätigbare Kupplung tragen, in der die Andruckwalze jeweils definiert orientiert gehalten ist, und jeweils in einem Positionierbereich der Kupplung Magazinfächer angeordnet sind, in denen die jeweils nicht benötigten Andruckwalzen ankuppelbar orientiert abgelegt sind.

Vorteilhafte Ausgestaltungen sind in den Unteransprüchen angegeben.

Die Kupplung der Walze und des Positionierers ist zweckmäßig mit einem Zentriermittel und einem Orientierungsmittel ausgerüstet, so dass die Walze in einer definierten Stellung am Positionierer angekuppelt wird und eine Positionsnacheichung nach einem Walzenwechsel entbehrlich ist. Die Kupplung ist vorzugsweise durch einen mechanischen Auslöser oder elektromagnetisch, pneumatisch oder hydraulisch automatisch gesteuert zu betätigen.

Im Magazin ist die Walze an einem Kupplungsansatz oder dem Kupplungshalter vorteilhaft so gehaltert, dass beim Ankuppeln eine Andrückkraft und beim Abkuppeln eine Abstreifkraft aufgenommen werden.

Das Herausnehmen der Walze nach dem Ankuppeln geschieht dann quer zur Richtung der Kupplungszentrierachse, ggf unter Freigabe des Entrastungsmechanismus oder Einschalten eines Verrastmechanismus oder einer Verriegelung.

Da die vorbekannte Ummantelungsvorrichtung die Positionierer in einem Rahmen enthält und die Positionierer im wesentlichen in der Rahmenebene agieren und gewöhnlich viele Rahmen je in geringem Abstand voneinander hintereinander angeordnet sind, ist dort praktisch kein Platz, ein Magazin in einem Zugriffsbereich des Positionierers einzurichten, aus dem eine automatische Walzenentnahme möglich wäre.

Vorteilhaft werden deshalb als Positionierer handelsübliche Roboter mit fünf oder sechs Drehachsen eingesetzt, die an ihrem freien Armende die Kupplung oder einen derartigen Greifer tragen. Auf diese Weise ist es möglich, das Magazin jeweils in einem vom Rollenförderer abseits liegenden Bereich anzuordnen, der dank der Bewegungsmöglichkeit infolge der Drehfreiheitsgrade der Roboterglieder gut zugänglich ist. Das Magazin liegt z. B. in einer Etage über den Rollenförderer oder auf der zu dieser entgegengesetzten Seite des Roboters.

Die Roboter sind zweckmäßig an oder neben der Rollenbahn fest montiert, so dass die Positionsmessung und Einstellung immer eindeutig zur Rollenbahn-Förderebene und somit zur zu ummantelnden Profiloberfläche ist.

Da die Roboterarme eine Elastizität besitzen und die Walze eine bestimmte hohe Andruckkraft für eine vorschriftsmäßige haltbare Ummantelung benötigt, wird der Roboterarm jeweils nach Erreichen der richtigen Position und Lage der Walze auf dem Profil senkrecht zu der Kontaktlinie oder -fläche durch Betätigung der zu dieser Bewegung gehörigen Positioniermotoren elastisch verformt belastet, bis die Walze mit einer vorgegebenen Kraft angedrückt wird. Diese Kraft wird dabei entweder gemäß der Konstellation der Roboterglieder durch die jeweiligen Motorbestromungen erzeugt und vorzugsweise jeweils durch eine Strommessung ermittelt oder durch einen Kraftsensor an der Kupplung gemessen. Das Strom- oder Kraftmesssignal dient oder beide dienen vorzugsweise einer Strom-Kraftregelung, wodurch sichergestellt ist, dass sich Toleranzen des Profils, des Mantelmaterials und des Walzendurchmessers auf die Andruckkraft nicht auswirken. Insbesondere wenn auf hartes Profilmaterial, wie Metall, eine dünne Folie aufzubringen ist, spielt das eine entscheidende Rolle für die Qualität der Klebeverbindung. Ein weiterer Vorteil der Kraftregelung ist es, dass die elastische Verformung des Roboterarmes und dessen Lagerspiele ausgeglichen werden, wodurch relativ leicht gebaute preiswerte Roboter zum Einsatz kommen können.

Eine ständige Krafterzeugung durch die Bestromung der Servomotoren würde zu einem laufenden Energieverbrauch führen, der durch eine steuerbare Blockierung oder Selbsthemmung der Motor- oder Getriebeachsen des Roboters vorteilhaft vermieden wird. Der Antrieb wird periodisch oder, wenn der Kraftsensor eine merkliche Kraftänderung signalisiert, ggf. bei gelöster Blockierung, kurzzeitig jeweils eingeschaltet, so dass etwaige Toleranzänderungen abgefangen werden. Die Winkel- bzw. Positionsänderungen werden dabei registriert und überwacht, und als unzulässig festgestellte Veränderungen werden an eine zentrale Steuerung gemeldet. Sofern, wie gewöhnlich, ein selbsthemmendes Getriebe dem Motor nachgeschaltet ist, entfällt die Blockierungsbremse.

Sämtliche Roboter sind mit ihren Antriebssteuerungen, Meßmitteln und Blockierungssteuerungen mit einem zentralen Steuer- und Überwachungsprozessor vernetzt. Dieser hat Ein- und Ausgabemittel, die eine Einstellung der Anlage auf ein neues Profil und neue Materialien erlaubt und einen Speicher enthält, der die Magazinbestückung und die jeweils bisher bekannten Profile und den zugehörigen Werkzeugeinsatz sowie die Koordinaten- und Kraft-Stromwerte einschließlich der Toleranzfelder dazu bereithält.

Eine vorteilhafte Ausgestaltung der Erfindung wird anhand der Fig. 1 bis 3 näher erläutert.
- Fig. 1: zeigt eine Draufsicht auf eine Ummantelungsstraße;
- Fig. 2: zeigt eine Seitenansicht zu Fig. 1;
- Fig. 3: zeigt eine Stirnansicht zu Fig. 1 in größerem Maßstab.

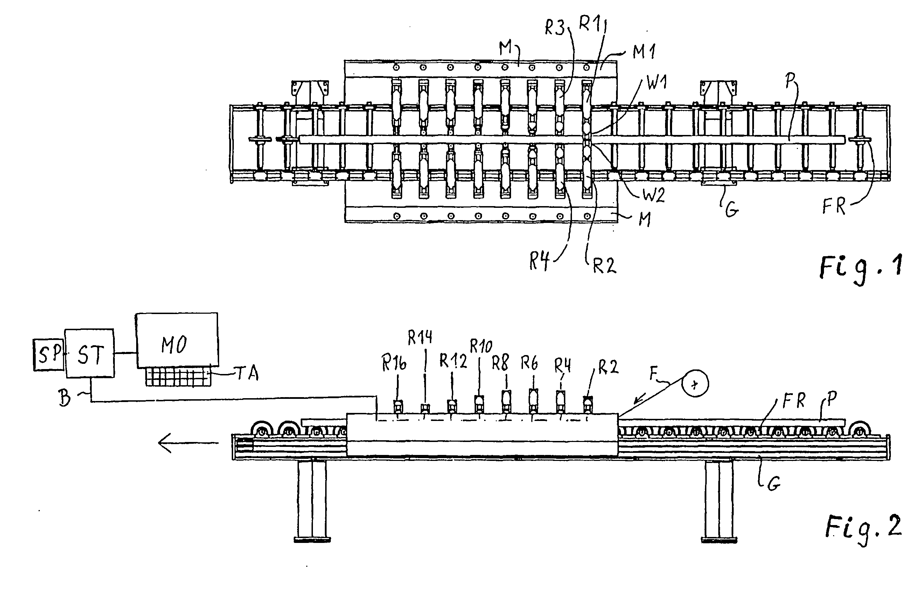

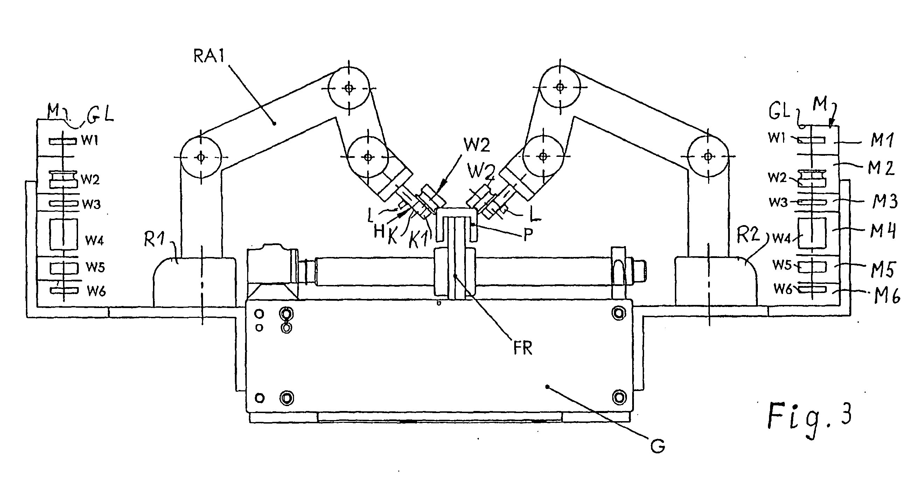

Fig. 1 und 2 zeigen ein Fördergestell G mit einem Rollenförderer mit Förderrollen FR, die angetrieben sind, so dass das Stangen-Profilmaterial P längsgerichtet gefördert wird. Von einer nicht gezeigten Abzugs- oder Abrollvorrichtung wird das unten beleimte Ummantelungsmaterial F, ein Furnier oder eine Folie, oben auf dem Profil zugeführt und mit der Andruckwalze W1 auf dieses aufgewalzt. Die seitlich überstehenden Folienbereiche werden in nachfolgenden Stationen von weiteren Walzen, insbesondere von Walzenpaaren symmetrisch angeordneter Walzen, wie Fig. 1 zeigt, deren Achse parallel zu einem Profilabschnitt ausgerichtet ist, in Streifenbereichen nach und nach glattgezogen angedrückt. Wie Fig. 3 zeigt, sind zum Glattziehen die Walzenachsen in bekannter Weise jeweils leicht gegen die Förderrichtung des Profils geneigt

Bekanntlich haben sich je nach der Profilart und der Lage der Walze am Profil unterschiedliche Profilierungen der Andruckwalzen bewährt, die zylindrisch konkav oder ballig sind.

Die Walze W2 ist auf einer durchgehenden Achse in einem Halter H gelagert, der eine Kupplung K trägt, die mit ihrer Gegenkupplung K1 an einem Roboterarm RA1 endseitig gehaltert ist. Die Kupplung K befindet sich mit der Gegenkupplung K1 in einem fest verrasteten und/oder verriegelten Zustand.

Weitere Andruckwalzen W1 - W6 mit anderen Profilen und/oder Abmessungen sind in Magazinfächern M1 - M6 von Magazinen M untergebracht und so mit ihrer Kupplung K orientiert, dass der Roboter R1 die Gegenkupplung K1 mit dieser verkuppeln kann, wenn er zuvor die bisher gehaltene Walze W1 entkuppelt abgelegt hat. Hierzu wird, sofern der Roboter die Gegenkupplung K1 nicht unmittelbar nach Art eines Greifers steuert, die Walze W1 mit ihrem Kupplungsteil K beispielsweise in eine Gabel GL des zugehörigen Magazinfaches M1 eingeführt, wobei ein Auslöser L an der Kupplung K durch die Gabel GL betätigt wird. In diesem gelösten Zustand zieht der Roboter R1 die Gegenkupplung K1 von der Kupplung K ab und ist frei, eine andere Walze in umgekehrter Bewegungsfolge anzukuppeln und dem Magazin zu entnehmen.

Die Kupplung K weist zur Gegenkupplung K1 Zentriermittel, wie Innen- und Außenkonus oder -pyramiden, Winkelorientierungsmittel, z. B. radiale Fortsätze und Nuten, sowie axiale Anschläge oder Kanten auf, die zusammen eine eindeutige Walzenposition erbringen, wenn die Kupplung verriegelt oder verrastet ist. Die Rastkraft wird vorteilhaft von einer Feder erbracht, die an Spreizhebel angeschlossen ist, die mit einem Spreizer und einem Betätiger am Magazinfach mit der Kupplung K1 lösend zusammenwirken.

Die Motoren des Roboters R1 sind mit Bremsen ausgerüstet, die elektromagnetisch, pneumatisch oder hydraulisch zentral gesteuert betätigt werden. Bevorzugt sind jedoch den Motoren selbsthemmende Getriebe nachgeschaltet.

Fig. 3 zeigt beidseitig des Profils P je eine Andruckwalze W2 an je einem Roboterarm RA1, RA2, die beidseitig des Profils und dessen Förderbahn aufgestellt sind. Da das Profil P an seinen Flanken abgerundet ist, liegen die Walzen W2 nur in einem schmalen Bereich an. Sie sind deshalb relativ kurz ausgebildet und konkav profiliert. Weitere ähnliche Andruckstationen, die eine steilere Achsstellung der Walzen aufweisen, sind in der Profilförderrichtung dieser Station nachgeordnet.

Fig. 1 und 2 zeigen eine typische Gesamtanordnung einer Ummantelungsstraße schematisch. Die Profile und das Ummantelungsmaterial F werden zusammengeführt. Unter Umständen sorgen Heißluftgeräte für das Aufschmelzen der Klebstoflbeschichtung des Ummantelungsmaterial F. Daran schließen sich die jeweils aus einem bis drei Robotern R1 - R16 bestehende Stationen mit Andruckwalzen W1 - W2 an. Daneben befinden sich die Magazine M für die Austauschwalzen.

Sämtliche Roboter R1 - R16 sind durch Kabel und Nachrichtenleitungen B mit einer Steuerzentrale ST verbunden, an der Bediengeräte, wie der Monitor MO und die Tastatur TA, und ein Speicher SP angeschlossen sind, in dem das Steuerprogramm und die Einstelldaten sowie die profilrelevanten Informationen gespeichert gehalten werden.

### Bezugszeichenliste

- B: Nachrichtenbus
- F: Ummantelungsmaterial
- FR: Förderrolle
- G: Gestell
- GL: Auslösegabel an Magazinfächern
- H: Halter
- K: Kupplung
- K1: Gegenkupplung
- L: Auslöser an Kupplung
- M: Magazin
- M1 - M6: Magazinfächer
- MO: Monitor
- P: Profilleiste
- R1 - R16: Roboter
- RA1, RA2: Roboterarme
- SP: Speicher
- ST: Steuervorrichtung
- TA: Tastatur
- W1- W6: Andruckwalzen

## Patentansprüche

1. Vorrichtung zum Ummanteln von Profilmaterial mit einem Rollenförderer (FR), auf dem das Profilmaterial (P) längsorientiert gefördert wird, und mit Andruckwalzen (W1 - W6), die jeweils zueinander so in je eine Andruckstellung positionierbar sind, dass ein beleimtes Ummantelungsmaterial (F) streifenbereichsweise um das Profil des Profilmaterials (P) quer oder leicht angestellt zur Förderrichtung orientiert angedrückt wird, indem einzelne oder mehrere der Andruckwalzen (W1- W6) jeweils in Gruppen in Förderrichtung hintereinander angeordnet sind und jeweils mittels eines mehrachsigen Positionierers (RA1, RA2) angedrückt werden, **dadurch gekennzeichnet, dass** die Positionierer (RA1, RA2) je eine automatisch betätigbare Kupplung (K, K1) tragen, in der die Andruckwalze (W1 - W6) jeweils definiert orientiert gehalten ist, und jeweils in einem Positionierbereich der Kupplung (K1) Magazinfächer (M1 - M6) angeordnet sind, in denen die jeweils nicht benötigten Andruckwalzen (W2 - W6) ankuppelbar orientiert abgelegt sind.

2. Vorrichtung nach Anspruch 1, **dadurch gekennzeichnet, dass** die komplementären Kupplungen (K, K1) Zentriermittel, wie einen Innen- und einen Außenkonus oder -pyramide, Winkelorientierungsmittel, wie einen radialen Fortsatz und eine Nut oder Kanten, sowie axiale Anschlagmittel enthalten.

3. Vorrichtung nach Anspruch 1 oder 2, **dadurch gekennzeichnet, dass** die Kupplung (K, K1) radial betätigbare Kupplungsrastmittel oder Verriegelungsmittel enthält.

4. Vorrichtung nach Anspruch 3, **dadurch gekennzeichnet, dass** jeweils die einzelnen Magazinfächer (M1- M6) Walzenaufnahmen tragen, die Kupplungslösemittel (GL) tragen, die mit den Kupplungsrastmitteln (L) zusammenwirken.

5. Vorrichtung nach Anspruch 4, **dadurch gekennzeichnet, dass** das Kupplungslösemittel eine divergierend geöffnete Gabel ist, die die Kupplung (K1) eng einschließt und dabei einen Knopf (L) oder einen Hebel der Rastmittel kupplungslösend betätigt.

6. Vorrichtung nach Anspruch 5, **dadurch gekennzeichnet, dass** die Zentriermittel senkrecht zu einer Andruckwalzenachse orientiert sind und die Gabel (GL) radial zu den Kupplungen (K, K1) orientiert ist.

7. Vorrichtung nach Anspruch 1, **dadurch gekennzeichnet, dass** die Positionierer (RA1, RA2) Roboter (R1 - R 16)mit fünf oder sechs Drehfreiheitsgraden sind.

8. Vorrichtung nach Anspruch 7, **dadurch gekennzeichnet, dass** die Roboter (R1 - R16) neben oder an den Rollenförderer (FR) fest montiert sind.

9. Vorrichtung nach Anspruch 7, **dadurch gekennzeichnet, dass** die Roboter (R1 - R16) mittels Servomotoren und Winkelgebern positionierbar sind und eine Antriebskraftregelung aufweisen, deren Istsignal jeweils aus einem Motorstromsignal und/oder einem Kraftsensorsignal gewonnen ist.

10. Vorrichtung nach Anspruch 9, **dadurch gekennzeichnet, dass** ein Kraftsensor jeweils axial in der Kupplung (K1) angeordnet ist.

11. Vorrichtung nach Anspruch 9, **dadurch gekennzeichnet, dass** die Roboter (R1 - R16) über einen Nachrichtenbus (B) mit einer zentralen Steuervorrichtung (ST) verbunden sind, die mit Kontroll- und Bedienmittel (MO, TA) verbunden ist und einen Speicher (SP) enthält, der profilbezogene Positionierdaten und magazinbezogene Andruck-walzendaten enthält.

12. Vorrichtung nach Anspruch 7, **dadurch gekennzeichnet, dass** die Roboter (R1 - R16) Motoren und/oder Getriebe enthalten, die durch steuerbare Bremsen festsetzbar sind oder selbsthemmend sind, so dass sie stromlos ihre Position halten.

## Claims

1. Device for covering profile material, comprising a roller conveyor (FR), whereon the profile material (P) is longitudinally guided, and pressure rollers (W1 - W6) which can be positioned, respectively, in relation to each other in a pressure position, such that a proportioned covering material (F) is pressed about the profile of the profile material (P) which is oriented transversal to or slightly on the conveying device, wherein single or several pressure rollers (W1 - W6) are arranged successively in groups in the direction of conveyance and are pressed, respectively, by means of a multi-axis positioning device (RA1, RA2), **characterized in that** the positioning devices (RA1, RA2) support an automatically actuatable coupling (K, K1), whereon the pressure roller (W1- W6) is maintained in a defined, oriented manner, and magazine compartments (M1 - M6) are respectively arranged in a positioning area of the coupling (K1), wherein pressure rollers (W2 - W6), which are not necessary, are placed in a couplable manner.

2. Device according to claim 1, **characterized in that** the complementary couplings (K, K1) comprise centring means such as an inner and an outer cone or pyramid-shape, angular orientation means such as a radial extension and a groove or edges, as well as axial limit stops.

3. Device according to claim 1, **characterized in that** the coupling (K, K1) comprises radially actuatable locking pieces or latching mechanisms.

4. Device according to claim 3, **characterized in that** the individual magazine compartments (M1 - M6), respectively, support roller seats, which maintain coupling release devices (GL) cooperating with the locking pieces (L).

5. Device according to claim 4, **characterized in that** the coupling release device is a divergent open fork, which encompasses the coupling (K1) tightly and, in the course of which, operates a button (L) or a lever to release the coupling.

6. Device according to claim 5, **characterized in that** the centring devices are perpendicular to an axis of a pressure roller, and that the fork (GL) is oriented radially to the couplings (K, K1).

7. Device according to claim 1, **characterized in that** the positioning devices (RA1, RA2) are robots (R1 -R16) turning in five or six degrees of freedom.

8. Device according to claim 7, **characterized in that** the robots (R1 - R16) are fixed next to or on the roller conveyor (FR).

9. Device according to claim 7, **characterized in that** the robots (R1 - R16) can be positioned by means of servomotors and angle transmitters., and possess a driving-force regulation, the actual signal of which is produced respectively by a motor-current signal and/or a force-sensor signal.

10. Device according to claim 9, **characterized in that** the force sensor is placed axially within the respective coupling (K).

11. Device according to claim 9, **characterized in that** the robots (R1 - R16) are connected to a master controller (ST) via a message bus (B), the master controller being linked to controlling and operating means (MO, TA), and comprising a memory (SP), which contains profile-related positioning data and magazine-related pressure roller data.

12. Device according to claim 7, **characterized in that** the robots (R1 - R16) comprise motors and/or transmissions, which can be arrested by controllable brakes or are self-locking, so that when idle, they keep their position.

## Revendications

1. Dispositif pour enrober un matériau profil, comportant un convoyeur à rouleaux (FR), sur lequel le matériau profil (P) est guidé longitudinalement, et comportant des rouleaux de serrage (W1 W6) qui peuvent respectivement être placés, l'un par rapport à l'autre, dans une position de pression, de telle manière qu'un matériau d'enrobage (F) encollé est serré dans une zone en forme de bande autour du profil du matériau profil (P), sur lequel il est orienté transversalement par rapport à la direction de transport ou légèrement en biais, de sorte qu'un ou plusieurs rouleaux de serrage (W1 - W6) sont groupés et installés l'un derrière l'autre dans la direction de transport et qu'ils sont serrés, chacun, à l'aide d'un dispositif de positionnement multiaxe (RA1, RA2), **caractérisé en ce que** chacun des dispositifs de positionnement (RA1, RA2) porte un accouplement à commande automatique (K, K1), dans lequel le rouleau de serrage (W1 - W6) est maintenu dans une position définie, et les cases de magasin (M1 - M6) sont arrangées dans un secteur de positionnement sur chaque dispositif d'accouplement (K1), où les rouleaux de serrage (W2 - W6), qui actuellement ne sont pas en usage, sont placés dans une orientation permettant le couplage.

2. Dispositif selon la revendication 1, **caractérisé en ce que** les dispositifs d'accouplement complémentaires (K, K1) comportent des moyens de centrage tels qu'un cône ou une pyramide intérieurs et extérieurs, un moyen d'orientation angulaire tel qu'une prolongation radiale et une cannelure ou des bords, aussi bien que des moyens de butée axiaux.

3. Dispositif selon la revendication 1 ou 2, **caractérisé en ce que** le dispositif d'accouplement (K, K1) comporte des moyens radialement opérables pour verrouiller ou bloquer l'accouplement.

4. Dispositif selon la revendication 3, **caractérisé en ce que** les différentes cases de magasin (M1 - M6), respectivement, portent des sièges de rouleau, qui maintiennent des dispositifs de dégagement d'accouplement (GL) qui concourent avec les moyens de verrouillage (L).

5. Dispositif selon la revendication 4, **caractérisé en ce que** le dispositif de dégagement d'accouplement est une fourchette ouverte divergente, qui entoure l'accouplement (K1) étroitement et, de cette façon actionne un bouton (L) ou un levier pour dégager l'accouplement.

6. Dispositif selon la revendication 5, **caractérisé en ce que** les dispositifs de centrage sont orientés perpendiculaires à un axe d'un rouleau de serrage, et la fourchette (GL) est orientée radialement aux accouplements (K, K1).

7. Dispositif selon la revendication 1, **caractérisé en ce que** les dispositifs de positionnement (RA1, RA2) sont des robots (R1 - R16) capables de tourner en cinq ou six degrés de liberté.

8. Dispositif selon la revendication 7, **caractérisé en ce que** les robots (R1 - R16) sont fixés à côté ou sur les convoyeurs à rouleaux (FR).

9. Dispositif selon la revendication 7, **caractérisé en ce que** les robots (R1 - R16) peuvent être placés au moyen des servomoteurs et des capteurs angulaires, et possèdent une commande de force motrice, dont le signal effectif est produit respectivement par un signal de courant moteur et/ou un signal de capteur de force.

10. Dispositif selon la revendication 9, **caractérisé en ce qu'**un capteur de force est placé axialement dans l'accouplement (K1) respectif.

11. Dispositif selon la revendication 9, **caractérisé en ce que** les robots (R1 - R16) sont reliés à un contrôleur central (ST) par l'intermédiaire d'un bus de données (B), le contrôleur central étant lié aux moyens de contrôle et de commande (MO, TA), et comportant une mémoire (PS), qui contient des données de positionnement spécifiques au profil et des données de rouleau de serrage spécifiques au magasin.

12. Dispositif selon la revendication 7, **caractérisé en ce que** les robots (R1 - R16) comportent des moteurs et/ou des engrenages, qui peuvent être arrêtés par des freins gouvernables ou sont autobloquants, de sorte qu'ils gardent leur position sans courant.
